# FASCICULE DE BREVET EUROPEEN

(11) **EP 3 204 326 B1**
(45) Date de publication et mention de la délivrance du brevet: **27.04.2022**
(21) Numéro de dépôt: 15798190.3
(22) Date de dépôt: 05.10.2015
(51) Int. Cl.: B67B 3/26

(54) **PROCÉDÉ D'ORIENTATION DE COMPOSANTS DE TUBE**
VERFAHREN ZUR AUSRICHTUNG VON ROHRKOMPONENTEN
METHOD FOR DIRECTING TUBE COMPONENTS

(30) Priorité: 07.10.2014 EP 14187985
(43) Date de publication de la demande: 16.08.2017
(73) Titulaire: Aisapack Holding SA, 1896 Vouvry (CH)
(72) Inventeur: MEDICO, Léonard, CH-1895 Vionnaz (CH); GALLET, Alexandre, CH-1896 Vouvry (CH); MONAY, Florent, CH-1896 Vouvry (CH); KAYAL, Salim, CH-1896 Vouvry (CH); FLEURET, François, CH-1896 Vouvry (CH)
(74) Mandataire: Grosfillier, Philippe
(86) Numéro de dépôt international: PCT/IB2015/057612
(87) Numéro de publication internationale: WO 2016/055924

(56) Documents cités:
- WO-A1-2011/116902

## Description

### Domaine de l'invention

L'invention se situe dans le domaine des tubes flexibles, et plus particulièrement des tubes d'emballage pour produits liquides ou visqueux dont la tête de tube ou le bouchon est orienté vis-à-vis du corps de tube.

### Etat de la technique

Pour des tubes à usage cosmétique, alimentaire ou oral care il est souvent nécessaire d'orienter un composant de la tête de tube par rapport à la partie flexible formant le corps de l'emballage. Le terme tête de tube désigne par exemple un bouchon charnière (snap-on) fixé par clipsage sur le goulot de l'épaule. Pour ces bouchons, il est souhaité que leur ouverture soit orientée par rapport à l'impression du corps de tube. D'autres bouchons à charnière sont vissés sur le goulot du tube. Dans ce cas, l'orientation de l'épaule par rapport au corps de tube est nécessaire pour que le bouchon se trouve in fine dans la position souhaitée. De façon plus générale, lorsque la tête de tube ne présente pas de symétrie de rotation, une opération d'orientation est nécessaire pour orienter la tête de tube par rapport au corps de tube.

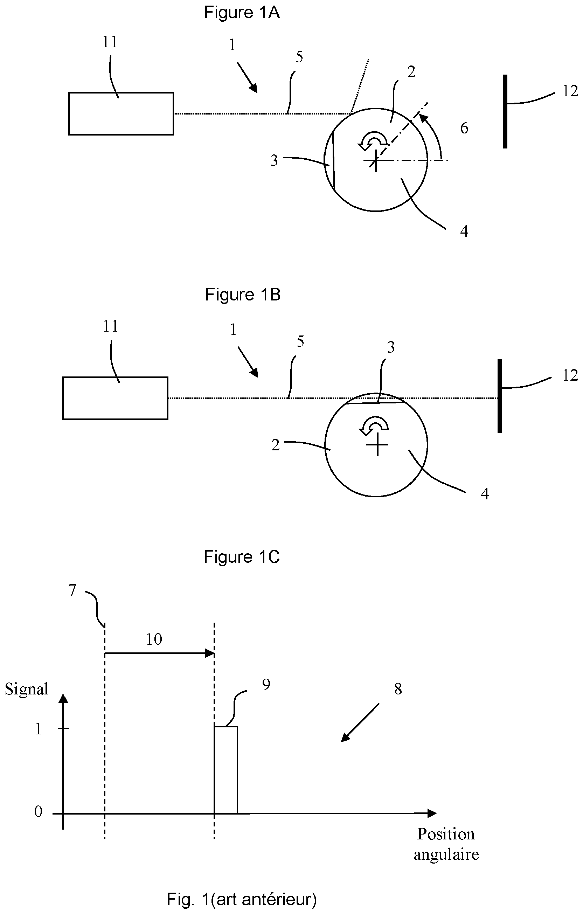

L'orientation des têtes de tube par rapport aux corps de tube est connue depuis longtemps par l'homme du métier et est effectué automatiquement sur les machines de production. Le principe couramment utilisé décrit figure 1 consiste à mettre en rotation un composant 2 comportant localement une encoche 3. Le faisceau 5 émis par la cellule laser 11 est obstrué par le composant 2 en rotation

(figure 1A) sauf lors du passage de l'encoche 3 devant le faisceau (figure 1B). Au moment de cet alignement, le faisceau laser 5 émis par la cellule 11 est réfléchi par le miroir 12 et détecté en retour par la cellule 11 (figure 1B). Le signal émis par ce type de cellule est illustré (figure 1C). Le signal 8 obtenu est tracé en fonction de la position angulaire 6 du composant 2. Le signal se présente sous la forme d'une impulsion 9 correspondant à l'alignement du faisceau laser 5 et de l'encoche 3 pendant la rotation. L'utilisation d'un servo-moteur pour la mise en rotation du composant 2, couplé au dispositif de détection de l'encoche 3 décrit précédemment, permet d'orienter ensuite le composant par rapport à une position de référence 7.

Bien qu'il soit très répandu, le système décrit précédemment comporte plusieurs inconvénients. Un premier inconvénient est lié à la géométrie de l'encoche qui parfois est difficile à détecter du fait de sa forme ou de sa taille. Dans certains cas, le positionnement de la cellule 11 nécessite des réglages très précis, ce qui occasionne des temps de réglage longs et couteux. Un autre inconvénient de ce système de détection est lié aux déformations des composants 2 par les pinces qui tiennent le composant 2 lors de la rotation. Finalement, de nombreux composants ne peuvent être orientés par ce dispositif parce ce que leur géométrie n'est pas adaptée (pas d'encoche 3) ou du fait de leur manque d'opacité par rapport au faisceau laser.

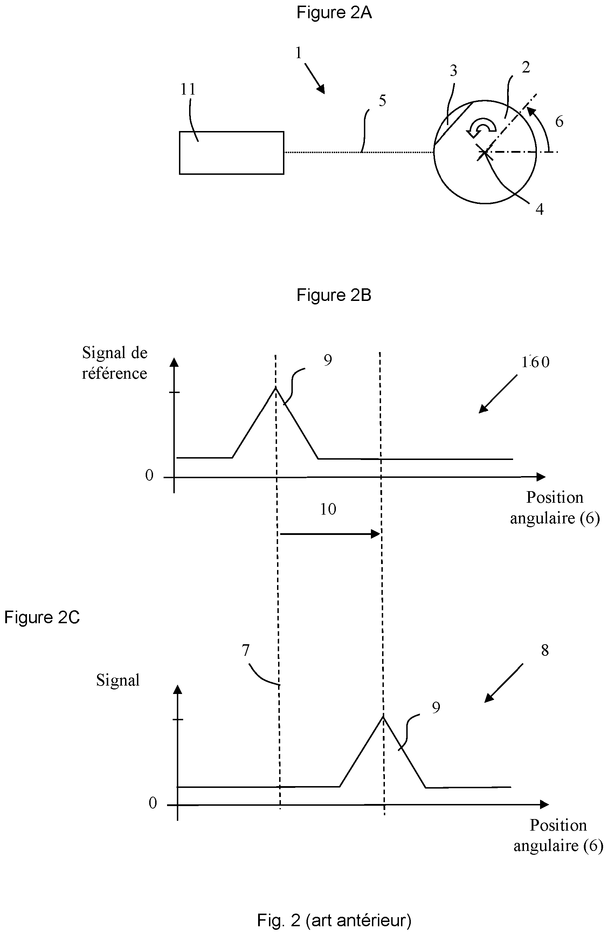

La demande de brevet WO2011116902 A1 de Schulthess divulgue un procédé selon le préambule de la revendication 1 et un dispositif selon le préambule de la revendication 11 et propose la méthode d'orientation illustrée figure 2 afin de palier aux difficultés précitées. Dans cette demande, il est proposé de disposer la cellule 11 tel qu'illustré figure 2A et d'analyser le signal retour reçu par la cellule lors de la rotation du composant 2. Un signal de référence 160 est défini pour la position du composant 2 orienté dans la position angulaire de référence 7 (figure 2B). La méthode d'orientation proposée par Schulthess consiste faire l'acquisition du signal 8 correspondant au bouchon à orienter (figure 2C) et à comparer ce signal 8 avec le signal de référence 160 afin de déterminer le déphasage 10. Plus précisément, Schulthess propose de calculer la corrélation entre le signal 8 et le signal 2. 160 en fonction du déphasage. L'alignement est trouvé pour le déphasage 10 correspondant à la meilleure corrélation.

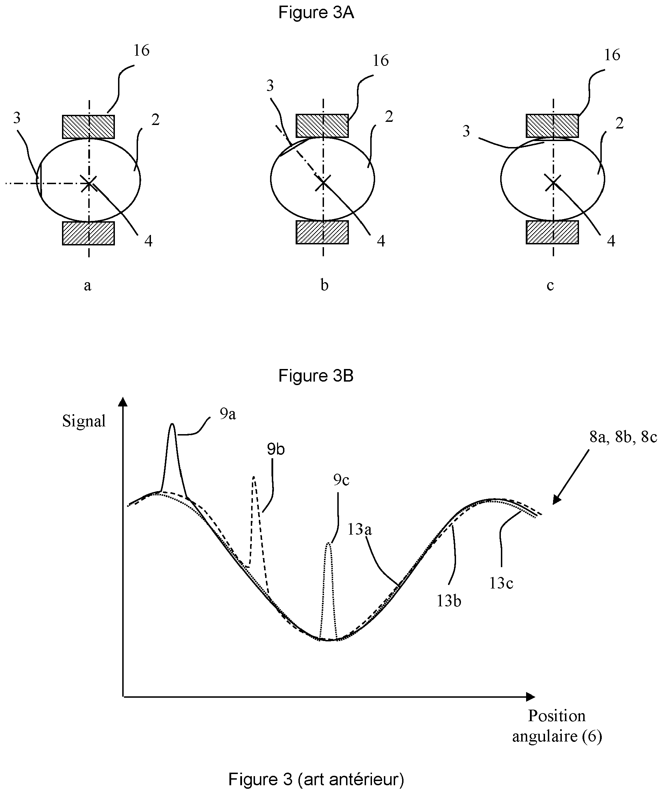

La méthode d'orientation proposée dans le brevet WO2011116902 permet de résoudre un certains nombre de problèmes rencontrés ultérieurement. Cependant, cette méthode présente plusieurs inconvénients. Le principal inconvénient est illustré figure 3. La figure 3A montre un exemple de déformation du composant 2 lorsqu'il est tenu par les pinces 16 de l'outil de mise en rotation. Les vues a, b, et c de la figure 3A représentent le composant 2 déformé par les pinces 16 pour 3 positions angulaires du composant 2 relativement aux pinces 16. La figure 3B représente les signaux 8a, 8b et 8c respectivement aux vues a, b, et c de la figure 3A. Les signaux 8a, 8b, et 8c sont obtenus lors de la rotation du composant 2 devant la cellule 11. Dans ces signaux, les pics caractéristiques 9a, 9b et 9c correspondant par exemple à l'encoche 3. La figure 3B illustre la meilleure corrélation obtenue entre deux signaux 8a, 8b et 8c selon la méthode proposée par Schulthess. On peut observer sur la figure 3B que les pics caractéristiques 9a, 9b et 9c des signaux notés respectivement 8a, 8b et 8c ne sont pas superposés. Ce résultat montre que dans ce cas précis la méthode préposée dans le brevet WO2011116902 ne peut être utilisée. Dans ce cas précis, l'alignement des pics caractéristiques 9a, 9b et 9c ne conduirait pas à une corrélation minimale ou maximale entre les signaux 8a, 8b et 8c. De façon générale, la méthode proposée par Schulthess ne peut pas s'appliquer lorsque le signal caractéristique du composant 9 est mélangé à un signal parasite 13 dont la phase est totalement indépendante. La méthode proposée par Schulthess ne permet pas notamment d'orienter des composants déformés par les pinces de maintien lors de la rotation. Cette méthode ne s'applique pas non plus lorsque l'outil engendre un signal parasite important, ce qui est généralement le cas des dispositifs industriels fonctionnant de façon automatique. Le signal parasite comporte des parties liées à l'outil de mise en rotation (jeux fonctionnels, défauts d'alignement, déformation du composant), d'autres liées aux irrégularités de positionnement du composant dans l'outil de mise en rotation, et d'autres liées à l'environnement (vibrations de la machine).

Le procédé et le dispositif selon les revendications 1 et 11 décrites ci-dessous 2. permettent de palier aux inconvénients précités.

### Définitions

Dans le présent texte le terme « composant » correspond à la numérotation 2 dans les figures et se réfère à l'élément de la tête de tube à orienter par rapport au corps de tube. Le composant est par exemple un bouchon.

Le terme « encoche » correspond à la numérotation 3 et est utilisé pour désigner un élément ou plusieurs éléments du composant qui permettent de définir une orientation en formant une référence détectable sur le composant 2. Ces éléments peuvent être liés à la géométrie du composant, à son état de surface, à sa composition, à sa couleur.

Le terme « cellule » correspondant à la numérotation 11 et désigne généralement une cellule laser permettant d'émettre et recevoir un signal. De façon plus générale, le terme cellule désigne un dispositif qui émet un signal et reçoit au moins une partie de ce signal ayant interagit avec le composant lors de sa rotation.

Le terme « faisceau » correspondant à la numérotation 5 se réfère au signal émis par la cellule.

Le terme « signal parasite » correspondant à la numérotation 13 désigne la partie du signal reçue par la cellule et dont l'information ne comportant pas d'information liée à l'orientation du composant.

Le terme « modèle du signal composant» correspondant à la numérotation 14 désigne la partie du modèle comportant les informations propres au composant et utiles pour son orientation.

Le terme «modèle du signal parasite» correspondant à la numérotation 15 désigne la partie du modèle comportant des informations inutiles à l'orientation du composant. Le modèle parasite comporte par exemple les informations liées à la déformation des composants dans l'outil de mise en rotation, aux irrégularités de positionnement des composants dans l'outil de mise en rotation, aux jeux fonctionnels de l'outil, aux vibrations, etc.

### Exposé général de l'invention

L'invention concerne un procédé d'orientation de composants selon la revendication 1 et un dispositif selon la revendication 11. L'invention propose en particulier un procédé d'orientation basé sur la mise en rotation du composant à orienter, l'émission et la réception d'un signal qui interfère avec le composant. L'information contenue dans le signal retour appelé « signal mesuré » est utilisée pour définir la position du composant dans l'outil de mise en rotation. Ensuite, la correction angulaire déduite est appliquée pour orienter le composant dans la position souhaitée.

Selon un mode de réalisation, l'invention comporte une première phase consistant à créer un modèle du signal mesuré lors d'une première phase dite « phase de modélisation ». Avantageusement, le modèle du signal mesuré se compose de la combinaison d'un premier signal représentatif du composant appelé « modèle du signal composant » et au moins d'un second signal caractéristique de l'appareil de mesure et de son environnement appelé « modèle du signal parasite ».

Selon l'invention, la combinaison du modèle du signal composant et du modèle du signal parasite peut être par exemple multiplicative ou additive ou de forme plus complexe. Une réalisation préférentielle de l'invention consiste en une combinaison additive.

Selon l'invention, la phase de modélisation est nécessaire pour chaque nouveau composant et nécessite l'acquisition du signal mesuré pour au moins 5 composants orientés de façon aléatoire, et de préférence au moins 10 composants. L'information contenue dans ces signaux mesurés est utilisée pour définir le modèle du signal.

A l'issue de la phase de modélisation, le signal mesuré est systématiquement substitué par le modèle du signal et par conséquent décomposé en un modèle signal composant et un modèle du signal parasite. La phase du modèle du signal composant indique la position angulaire du composant.

Le procédé comporte une seconde phase dite « phase d'étalonnage » consistant à définir la position de référence du composant correspondant à l'orientation angulaire souhaitée. Cette phase nécessite l'intervention de l'opérateur qui définit le déphasage à effectuer pour un composant orienté aléatoirement. Le déphasage est comparé à la phase du modèle du signal composant et la position de référence est définie.

Le procédé comporte une troisième phase dite d'orientation automatique ou de production. Pendant la phase de production, les composants sont orientés automatiquement. Le procédé d'orientation comporte une première étape de substitution du signal mesuré par le modèle du signal. Cette opération consiste au moins à faire varier la phase du modèle du signal composant et identifier la phase dite « phase composant » donnant la meilleure adéquation entre le signal mesuré et le modèle du signal. La meilleure adéquation est obtenue en minimisant la somme des écarts au carré entre le signal mesuré et le modèle du signal. Le procédé comporte ensuite une seconde étape qui consiste à modifier la position angulaire du composant de la valeur du déphasage entre la phase composant et la position de référence définie préalablement.

Selon l'invention, la recherche de la phase composant peut être réalisée en faisant varier conjointement la phase du modèle composant et la phase du modèle parasite et à trouver la meilleure adéquation entre le modèle du signal et le signal mesuré. La méthode préférentielle consiste à faire varier uniquement la phase du modèle composant.

Un premier avantage de l'invention est sa robustesse, ce qui permet son utilisation dans des milieux industriels où les bruits parasites ont des amplitudes importantes. L'invention permet notamment l'orientation de composants même si l'amplitude des signaux parasites est largement supérieure à l'amplitude du signal propre au composant.

Un second avantage de l'invention est la possibilité d'orienter des composants à grande cadence de production.

L'invention permet par exemple d'orienter des composants déformés par l'outil de mise en rotation. La déformation du composant peut être fonction de sa position dans l'outil de mise en rotation. Le signal de déformation du composant est par conséquent inexploitable pour orienter le composant et devient un signal parasite. L'invention permet de séparer l'information liée à l'orientation du bouchon et l'information parasite liée à sa déformation. L'invention permet de façon similaire de séparer l'information parasite liée aux variations de positionnement du composant dans l'outil de mise en rotation, ou l'information parasite liée aux défauts de l'outil de mise en rotation (faux rond, vibrations, défaut alignement).

Ce procédé permet de définir la position angulaire du composant même si le niveau des bruits parasites inhérents au système de mesure et à son environnement est d'amplitude supérieure au signal caractéristique du composant à orienter.

La présente invention est définie par les caractéristiques contenues dans les revendications indépendantes, les revendications dépendantes définissant des modes d'exécution plus particuliers de celle-ci.

### Brève description des figures

La figure 1 comportant les figures 1A, 1B et 1C représente le dispositif et le procédé d'orientation de l'art antérieur et couramment utilisé dans l'industrie pour orienter des composants par rapport à des corps de tube.
La figure 1A illustre une position aléatoire du composant dans le dispositif d'orientation.
La figure 1B représente la détection de l'encoche 3 du composant lors du processus d'orientation.
La figure 1C présente le signal résultant de la rotation du composant.
La figure 2 comportant les figures 2A, 2B et 2C illustre une seconde méthode d'orientation décrite dans la demande de brevet WO2011116902.
La figure 2A représente le dispositif d'orientation utilisé.
La figure 2B illustre le signal de référence correspondant à une position angulaire connue du composant.
La figure 2C représente un signal mesuré pour une position aléatoire du composant.
La figure 3 comportant les figures 3A et 3B illustre un inconvénient de la méthode proposée dans la demande de brevet WO2011116902.
La figure 3A montre la déformation du composant 2 dans les pinces 16 de l'outil de mise en rotation. Les vues a, b et c illustrent différentes positions angulaire du composant 2 dans les pinces 16.
La figure 3B illustre la meilleure corrélation obtenue entre les signaux 8a, 8b et 8c correspondant respectivement aux vues a, b et c de la figure 3A. La meilleure corrélation entre les deux signaux ne correspond pas à une orientation identique des composants
La figure 4 illustre le dispositif d'orientation utilisé dans l'invention.
La figure 5 comportant les figures 5A, 5B et 5C illustre la phase de création d'un modèle de signal.
La figure 5A illustre l'acquisition des signaux 8a, 8b, 8c, 8d, 8e et 8f correspondant à une orientation aléatoire des composants a, b, c, d, e et f pendant la phase de modélisation.
La figure 5B illustre le modèle du signal composant issu de la phase de modélisation.
La figure 5C illustre le modèle du signal parasite issu de la phase de modélisation.
La figure 6 illustre le déphasage entre le modèle du signal composant et la position de référence.
La figure 7 montre le procédé d'orientation selon l'invention.

### Exposé détaillé de l'invention

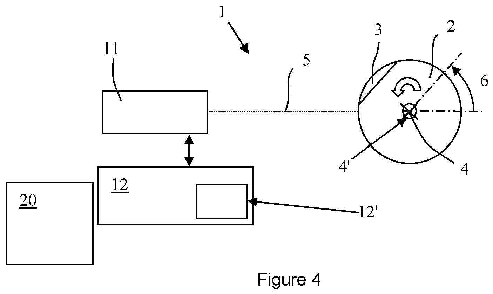

Le principe général de l'invention illustré figure 4 est un dispositif et un procédé d'orientation basé sur la mise en rotation du composant 2 à orienter, l'émission et la réception d'un signal 5 qui interfère avec le composant. L'information contenue dans le signal retour appelé « signal mesuré » est utilisée pour définir la position du composant dans l'outil de mise en rotation. Ensuite, la correction angulaire déduite est appliquée pour orienter le composant dans la position souhaitée.

Le dispositif d'orientation illustré en figure 4 comporte au moins une cellule 11 qui émet et reçoit un signal 5 interférant avec le composant 2 en rotation autour d'un axe 4, des moyens de mise en rotation du composant 2, et des moyens de traitement de l'information issue de la cellule 11. La cellule 11 peut se composer de 2 entités indépendantes ; une première pour l'émission du signal 5, une seconde pour la réception du signal ayant interféré avec le composant.

Plus précisément, le dispositif d'orientation de composants selon la présente invention comprend au moins une cellule 11 destinée à émettre et recevoir un signal 5 (de préférence un signal optique) et des moyens de traitement de l'information 12, par exemple un système de type calculateur ou ordinateur autre système équivalent.

Selon un mode préférentiel de réalisation de l'invention, la cellule 11 est un capteur optique de type énergétique qui est relié aux moyens de traitement de l'information 12. Selon ce mode préférentiel lesdits moyens 12 comportent principalement un processeur indépendant 12'. Ce processeur 12' réalise notamment le traitement des informations envoyées par la cellule 11 et par un codeur 4' situé sur l'axe de l'outil de mise en rotation du composant. Ledit codeur 4' informe ledit processeur 12' de la position angulaire de l'outil de mise en rotation. Lorsque le déphasage du composant par rapport à la référence est calculé, le processeur 12' interagit avec la commande du moteur de mise en rotation du composant afin d'orienter ledit composant dans la bonne position. Selon le mode préférentiel, le processeur 12' est également relié à un écran d'affichage 20 qui permet à l'opérateur d'effectuer les réglages initiaux et assurer un suivi de l'orientation des composants 2 pendant la production.

Le dispositif précédemment décrit est particulièrement avantageux car il permet d'orienter des composants 2 à grande cadence de production. L'usage d'un processeur d'orientation 12' indépendant du processeur de la machine permet de traiter les informations relatives à l'orientation des composants 2 en parallèle des informations liées au pilotage de la machine et traitées par le processeur de la machine.

Un autre avantage du dispositif proposé est lié à sa modularité. Le dispositif décrit dans la présente invention peut être implémenté sans grande difficulté sur des machines très différentes dans leur fonctionnement ou dans leur mode de commande. Le dispositif est également modulaire car il peut être évolutif soit au niveau du traitement de l'information soit au niveau du matériel. Cette évolution peut se faire indépendamment du reste de la machine.

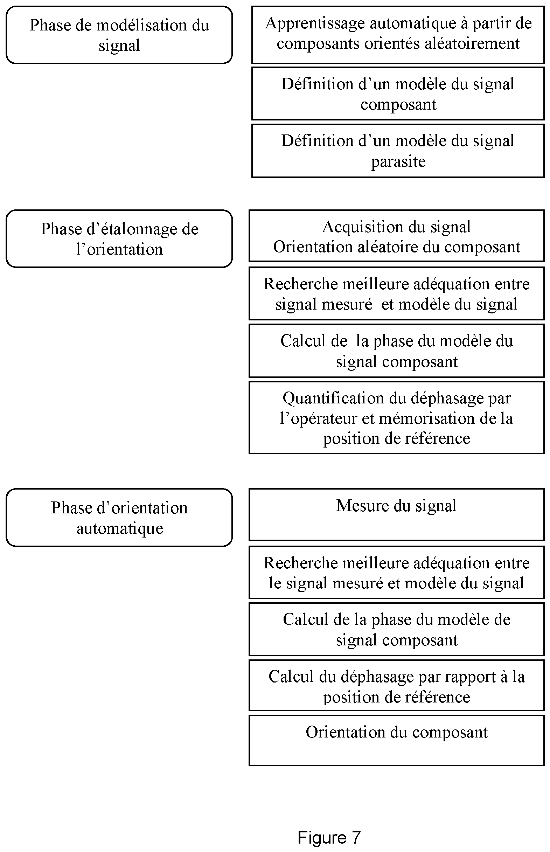

Le cœur de l'invention réside notamment dans un procédé d'orientation dont les principales étapes sont décrites figure 7. Ce procédé comporte au moins 3 phases ; une première phase dite de modélisation du signal, une seconde phase dite d'étalonnage, une troisième phase dite d'orientation automatique.

La phase de modélisation consiste à faire l'acquisition de plusieurs signaux relatifs à des composants orientés de façon aléatoire ; puis à exécuter un traitement numérique approprié permettant de définir un modèle du signal. Le modèle du signal selon l'invention se compose au moins d'un modèle du signal composant et d'un modèle du signal parasite. Selon l'invention, le modèle du signal composant comporte les informations propres au composant et utiles pour définir son orientation tandis que le modèle du signal parasite comporte les informations caractéristiques de l'appareil de mesure et de son environnement et par conséquent non utiles à l'orientation du composant. Dans le modèle, la phase ou la position angulaire du modèle du signal composant est variable puisque précisément c'est cette position angulaire qui doit être trouvée afin in fine d'orienter ledit composant.

La phase de modélisation est faite automatiquement par la machine, sans intervention de l'opérateur. Pour que le modèle défini soit suffisamment robuste, il est nécessaire que le modèle du signal parasite prenne en compte les perturbations pouvant apparaitre lors de production. Pour cette raison, l'acquisition des signaux pour la phase de modélisation est réalisée dans l'environnement de production, c'est-à-dire avec un réglage de machine identique à celui utilisé pour la production. Un nombre minimal de composant doit être utilisé pour rendre compte de l'ensemble des perturbations pouvant apparaître lors de la production et afin d'obtenir une distribution de l'orientation des composants dans le dispositif suffisamment aléatoire. Par expérience, il a été trouvé que la robustesse du modèle nécessite l'acquisition successive d'au moins 5 signaux correspondant à 5 composants orientés aléatoirement dans le dispositif de mise en rotation. Préférentiellement, au moins 10 signaux sont utilisés pour définir le modèle. Un nombre de signaux plus important peut être nécessaire lorsque les composants sont de mauvaise qualité et présentent des variations dimensionnelles importantes, ou lorsque la machine est usagée ou mal ajustée. Généralement, les machines d'emballage nécessitant cette opération d'orientation fonctionnent à des cadences supérieures à 60 pièces par minute et par station. La durée d'acquisition de 10 signaux est donc inférieure à 6 secondes ce qui indique qu'un nombre plus conséquent de signaux pourrait être utilisé sans que cela ait un impact significatif sur le temps de réglage de la machine.

La phase de modélisation requiert la recherche du modèle de signal à partir des signaux acquis. Un traitement numérique approprié est effectué à partir de ces données pour définir le modèle du signal composant et le modèle du signal parasite. Le modèle du signal résulte de la combinaison du modèle du signal composant et du modèle du signal parasite. Préférentiellement, le modèle du signal résulte d'une combinaison additive du signal composant et du signal parasite. Des combinaisons multiplicatives ou de forme plus complexe peuvent également être envisagées. Selon l'invention, au moins la phase du modèle de composant est variable. La phase du modèle de signal composant indique la position angulaire du composant dans l'outil de mise en rotation. Selon un mode préférentiel de réalisation de l'invention, la phase du modèle de signal parasite est constante, ce qui indique que les parasites sont principalement liés à l'outil de mise en rotation dudit composant.

Le procédé d'orientation de composant comprend ensuite une phase d'étalonnage comme indiqué figure 7. La phase d'étalonnage a pour objectif de définir la position orientée souhaitée. Cette phase nécessite l'intervention de l'opérateur qui indique la valeur de la rotation angulaire à effectuer (c'est-à-dire la valeur du déphasage) pour orienter un composant positionné aléatoirement dans le dispositif d'orientation. La phase d'étalonnage comprend plusieurs étapes. Une première étape consiste à faire l'acquisition du signal pour un bouchon positionné aléatoirement dans l'outil de mise en rotation. Dans une seconde étape, la phase du modèle du signal composant est ensuite déterminée afin de minimiser l'écart entre le signal mesuré et le modèle du signal. La phase du modèle composant permettant de minimiser l'écart définit la position angulaire du composant dans l'outil de mise en rotation. Lors de la troisième étape l'opérateur indique la valeur de déphasage à effectuer pour obtenir l'orientation souhaitée. Cette dernière étape permet de définir la position angulaire de référence du modèle de signal composant qui correspond à la position orientée dudit composant.

Comme indiqué figure 7, la troisième phase du procédé d'orientation est la phase d'orientation automatique ou phase de production. Pendant cette phase la machine oriente automatiquement les composants à grande cadence de production. La phase d'orientation automatique comprend au moins la succession d'une étape d'acquisition du signal, d'une étape de recherche de la phase du modèle de composant, d'une étape de calcul du déphasage à effectuer par rapport à la position de référence (position orientée), et enfin d'une étape d'orientation du composant en appliquant le déphasage.

La phase d'orientation automatique doit être réalisée dans des temps très réduits compte tenu de la vitesse de production. Un grand avantage de l'invention est la possibilité d'atteindre des cadences de production très élevées. Dans la seconde étape, l'utilisation du modèle du signal pour définir la phase du signal permet des temps de calcul très courts. Dans cette seconde étape, il est d'un grand intérêt grâce au modèle de pouvoir remplacer le signal mesuré par un modèle de signal résultant de la combinaison d'un modèle du signal composant et d'un modèle du signal parasite. Cette substitution est obtenue en faisant varier la phase du modèle du signal composant et en comparant le modèle du signal avec le signal mesuré. La phase du modèle du signal composant est déterminée lorsque l'écart entre le modèle de signal et le signal mesuré est minimal. La méthode préférentiellement utilisée pour minimiser l'écart entre le modèle de signal et le signal mesuré consiste à minimiser la somme des écarts au carré entre les deux signaux. L'utilisation d'un modèle pour effectuer ces opérations est d'un grand avantage car le modèle du signal peut être décomposé en un modèle du signal composant et un modèle du signal parasite.

Selon l'invention, le procédé d'orientation permet également de quantifier la fiabilité de l'orientation à partir de l'analyse de l'écart entre le modèle du signal et le signal mesuré. La valeur de fiabilité obtenue peut être utilisée pour éjecter les composants dont l'orientation est jugée incertaine.

Le procédé décrit figure 7 présente une grande robustesse car les bruits parasites sont soustraits. L'avantage du procédé réside en l'utilisation d'un modèle pour les bruits parasites et un modèle caractéristique du composant et de son orientation.

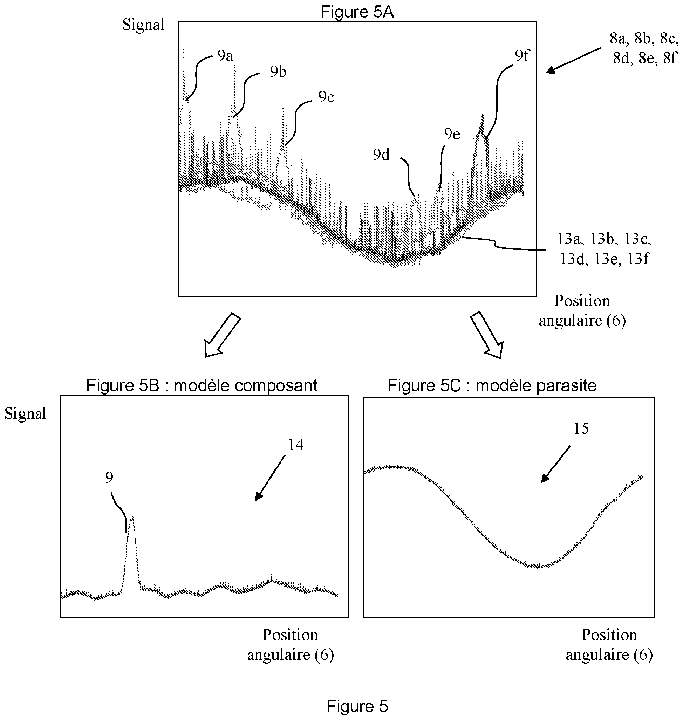

La figure 5 comportant les figures 5A, 5B et 5C illustre la phase de modélisation. La figure 5A montre un exemple d'acquisition de signaux mesurés 8a à 8f en fonction de la position angulaire 6 de l'outil de mise en rotation. Comme illustré figure 5A, il est possible d'identifier dans ces signaux, les pics 9a, à 9f dont la phase varie et qui sont caractéristiques de l'orientation respective des composants a à f dans l'outil de mise en rotation. On observe également que lesdits signaux mesurés 8a à 8f, présentent un bruit parasite 13a à 13 f en phase avec l'outil de mise en rotation. Un traitement approprié de l'ensemble des signaux 8a à 8f permet l'obtention du modèle du signal illustré figures 5B et 5C. Sur la figure 5B, est représenté le modèle du signal composant 14 dont la phase est variable et qui est représentatif uniquement du composant et de son orientation. Dans ce signal, le pic 9 qui est le modèle des pics 9a à 9c de la figure 5A, est facilement identifiable. On observe également figure 5B une série de pics secondaires qui peuvent être utilisés également pour l'orientation du composant mais qui sont impossible à identifier visuellement dans les signaux mesurés de la figure 5A. Cet exemple montre que le procédé selon l'invention permet d'identifier des caractéristiques du composant qui sont indétectables dans le signal mesuré à cause des bruits parasites. La figure 5C illustre le modèle du signal parasite 15 représentatif des bruits parasites 13a à 13f de la figure 5A. Dans le modèle du signal parasite illustré figure 5C, seuls les bruits n'apparaissant pas aléatoirement sont retenus. Dans l'exemple de la figure 5, le modèle du signal parasite 15 est en phase avec l'outil de mise en rotation. Dans l'exemple de la figure 5, le modèle du signal correspond à la somme du modèle du signal composant illustré figure 5B et du modèle du signal parasite illustré figure 5C.

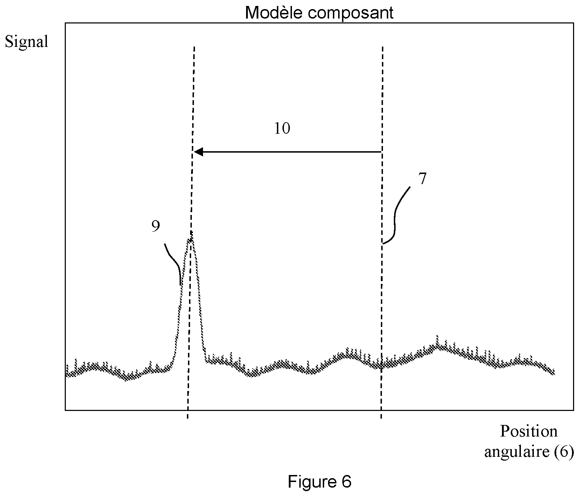

La figure 6 illustre l'opération effectuée lors de la phase d'étalonnage. Cette opération consiste à déterminer la position de référence 7 correspondant à l'orientation souhaitée du composant. Lors de cette phase d'étalonnage, l'opérateur définit la rotation angulaire, c'est-à-dire le déphasage 10 à effectuer sur le composant pour obtenir l'orientation souhaitée. Comme l'illustre la figure 6, le déphasage est calculé à partir du modèle composant et non pas à partir du signal mesuré.

La méthode d'orientation décrite dans l'invention est particulièrement pertinente pour orienter des bouchons par rapport à des corps de tube imprimés. En particulier, l'invention permet d'orienter des bouchons clipsés de type « snap-on » afin que l'ouverture du tube soit en concordance avec l'impression. L'invention permet notamment d'orienter des bouchons de faible épaisseur qui se déforment dans les pinces de l'outil de mise en rotation.

L'invention permet d'améliorer la précision de l'orientation du composant car le déphasage 10 à appliquer est défini avec une grande précision.

L'invention permet d'orienter les composants en très peu de temps, ce qui permet d'atteindre des grandes cadences de production.

L'invention permet de diminuer les rejets liés à des variations dimensionnelles des composants (déformations, retraits) ou des variations de couleur.

L'invention permet de réduire considérablement les temps de réglage lors d'un changement de composant (géométrie, diamètre, couleur).

Les modes d'exécution de la présente invention sont donnés à titre d'exemples illustratifs et ne doivent pas être considérés comme limitatifs. Des variantes sont possibles dans le cadre de la protection, qui est défini par les revendications.

Par exemple: la cellule d'émission et réception du signal (11) pourrait être mise en mouvement autour du composant qui lui resterait fixe.

De préférence, on positionne la cellule selon un axe perpendiculaire à l'axe de rotation de l'objet/composant à orienter. Une position de la cellule selon un plan parallèle à l'axe d'orientation de l'objet peut également être utilisée si l'information contenue dans le plan de lecture comprend une information relative à l'orientation angulaire du composant (par exemple la surface supérieure de l'objet).

De manière plus générale, le positionnement de l'axe de la cellule peut être réglé selon différentes orientations par rapport à l'axe d'orientation.

Toute référence détectable sur le composant peut être utilisée dans le cadre de la présente invention pour déterminer la position dudit composant et orienter ledit composant selon les principes de la présente invention.

Le signal utilisé pour la mesure et l'orientation peut être un signal optique ou autre (électrique, magnétique etc.) qui est transformé cas échéant pour son traitement selon les principes de la présente invention.

## Revendications

1. Procédé d'orientation de composants (2) de tube, tels que tête ou bouchon, comprenant une étape de mesure de la position angulaire d'un composant (2) par la détermination de la position d'une référence dudit composant (2) suivie d'une étape d'orientation dudit composant (2) lors de laquelle la correction angulaire du composant (2) est déterminée en tenant compte du signal mesuré (5) pendant l'étape de mesure ; procédé **caractérisé par le fait que** ladite correction angulaire est également déterminée en tenant compte d'un signal parasite modélisé (15), qu'il comprend une étape préliminaire, dite « phase de modélisation », lors de laquelle un signal mesuré est modélisé, que le signal mesuré modélisé est substitué au signal mesuré pendant l'étape de mesure pour ladite correction angulaire et que le signal mesuré modélisé comprend ledit signal parasite modélisé et un signal composant modélisé.

2. Procédé selon la revendication 1 dans lequel le signal modélisé est déterminé par acquisition d'un échantillonnage de signaux mesurés.

3. Procédé selon l'une des revendications 1 ou 2 dans lequel le signal modélisé est déterminé par acquisition de signaux mesurés sur plusieurs composants.

4. Procédé selon la revendication 3 dans lequel l'acquisition de signaux mesurés est réalisée sur au moins 5 composants.

5. Procédé selon l'une quelconque des revendications précédentes comprenant une étape d'étalonnage consistant à définir la position de référence du composant correspondant à l'orientation angulaire souhaitée.

6. Procédé selon l'une quelconque des revendications précédentes comprenant une étape d'orientation automatique consistant au moins à faire varier la phase du modèle du signal composant et identifier la phase dite « phase composant » donnant la meilleure adéquation entre le signal mesuré et le modèle du signal, le procédé comprenant ensuite une seconde étape qui consiste à modifier la position angulaire du composant de la valeur du déphasage entre la phase composant et la position de référence définie préalablement.

7. Procédé selon la revendication 6 dans lequel la recherche de la phase composant consiste à faire varier conjointement la phase du modèle composant et la phase du modèle parasite et à trouver la meilleure adéquation entre le modèle du signal et le signal mesuré.

8. Procédé selon la revendication 6 dans lequel la recherche de la phase composant consiste à faire varier uniquement la phase du modèle composant.

9. Procédé selon la revendication 1 dans lequel le signal parasite est déterminé théoriquement en tenant compte de la géométrie du composant.

10. Procédé selon l'une quelconque des revendications précédentes dans lequel la mesure est optique.

11. Dispositif d'orientation de composants de tube comprenant au moins une cellule (11) destinée à émettre et recevoir un signal (5), des moyens de traitement de l'information (12) comprenant un microprocesseur (12'), **caractérisé en ce que** le dispositif comprend une unité de traitement destinée à produire un signal parasite modélisé, le microprocesseur (12') est configuré pour réaliser le traitement des informations envoyées par la cellule (11) et par un codeur (4') situé sur l'axe de l'outil de mise en rotation du composant (2) et est aussi configuré pour indiquer la position angulaire utilisant le procédé tel que défini dans l'une quelconque des revendications précédentes.

12. Dispositif selon la revendication 11, comprenant en outre un écran d'affichage (20).

13. Dispositif selon l'une des revendications 11 à 12, ledit dispositif étant indépendant de la machine de production dans lequel il est monté et modulaire.

14. Machine de production de tubes flexibles, comme des tubes d'emballage pour produits visqueux comprenant un dispositif d'orientation selon l'une des revendications 11 à 13.

## Patentansprüche

1. Verfahren zur Ausrichtung von Tubenkomponenten (2), wie etwa Kopf oder Verschluss, umfassend einen Schritt des Messens der Winkelposition einer Komponente (2) durch die Bestimmung der Position einer Referenz der Komponente (2) gefolgt von einem Schritt des Ausrichtens der Komponente (2), bei dem die Winkelkorrektur der Komponente (2) unter Berücksichtigung des Signals (5) bestimmt wird, das während des Schritts des Messens gemessen wird; wobei das Verfahren **dadurch gekennzeichnet ist, dass** die Winkelkorrektur ebenfalls unter Berücksichtigung eines modellierten Störsignals (15) bestimmt wird, dass es einen vorbereitenden Schritt, die "Modellierungsphase", umfasst, bei der ein Messsignal modelliert wird, dass das Messsignal während des Schritts des Messens für die Winkelkorrektur durch das modellierte Messsignal ersetzt wird, und dass das modellierte Messsignal das modellierte Störsignal und ein modelliertes Komponentensignal umfasst.

2. Verfahren nach Anspruch 1, wobei das modellierte Signal durch Erfassung einer Abtastung von Messsignalen bestimmt wird.

3. Verfahren nach einem der Ansprüche 1 oder 2, wobei das modellierte Signal durch Erfassung von Messsignalen an mehreren Komponenten bestimmt wird.

4. Verfahren nach Anspruch 3, wobei die Erfassung von Messsignalen an wenigstens 5 Komponenten durchgeführt wird.

5. Verfahren nach einem der vorhergehenden Ansprüche, umfassend einen Schritt des Kalibrierens, der darin besteht, die Referenzposition der Komponente festzulegen, die der gewünschten Winkelausrichtung entspricht.

6. Verfahren nach einem der vorhergehenden Ansprüche, umfassend einen Schritt des automatischen Ausrichtens, der wenigstens darin besteht, die Phase des Modells des Komponentensignals zu verändern und die als "Komponentenphase" bezeichnete Phase zu ermitteln, die die beste Übereinstimmung zwischen dem Messsignal und dem Modell des Signals liefert, wobei das Verfahren anschließend einen zweiten Schritt umfasst, der darin besteht, die Winkelposition der Komponente um den Wert der Phasenverschiebung zwischen der Komponentenphase und der zuvor festgelegten Referenzposition zu ändern.

7. Verfahren nach Anspruch 6, wobei die Suche nach der Komponentenphase darin besteht, die Phase des Komponentenmodells und die Phase des Störmodells gemeinsam zu verändern und die beste Übereinstimmung zwischen dem Modell des Signals und dem Messsignal zu finden.

8. Verfahren nach Anspruch 6, wobei die Suche nach der Komponentenphase darin besteht, nur die Phase des Komponentenmodells zu verändern.

9. Verfahren nach Anspruch 1, wobei das Störsignal theoretisch unter Berücksichtigung der Geometrie der Komponente bestimmt wird.

10. Verfahren nach einem der vorhergehenden Ansprüche, wobei die Messung optisch ist.

11. Vorrichtung zur Ausrichtung von Tubenkomponenten umfassend wenigstens eine Zelle (11) zum Senden und Empfangen eines Signals (5), Mittel zur Verarbeitung der Information (12), die einen Mikroprozessor (12') umfassen, **dadurch gekennzeichnet, dass** die Vorrichtung eine Verarbeitungseinheit zur Erzeugung eines modellierten Störsignals umfasst, der Mikroprozessor (12') dazu ausgebildet ist, die Verarbeitung der Informationen durchzuführen, die von der Zelle (11) und von einem Codierer (4') gesendet werden, der sich auf der Achse des Werkzeugs zur Drehung der Komponente (2) befindet, und auch dazu ausgebildet ist, die Winkelposition mithilfe des Verfahrens nach einem der vorhergehenden Ansprüche anzugeben.

12. Vorrichtung nach Anspruch 11, ferner umfassend einen Anzeigebildschirm (20).

13. Vorrichtung nach einem der Ansprüche 11 bis 12, wobei die Vorrichtung von der Produktionsmaschine, in der sie angebracht ist, unabhängig und modular ist.

14. Produktionsmaschine für flexible Tuben wie Verpackungstuben für viskose Produkte, umfassend eine Ausrichtungsvorrichtung nach einem der Ansprüche 11 bis 13.

## Claims

1. Method for orienting tube components (2), such as a head or a stopper, comprising a step of measurement of the angular position of a component (2) by determining the position of a reference of said component (2) followed by a step of orienting said component (2) during which the angular correction of the component (2) is determined by taking account of the signal (5) measured during the measurement step; the method being **characterized by** the fact that said angular correction is also determined by taking account of a modelled interfering signal (15), that it comprises a preliminary step, called the "modelling phase", during which a measured signal is modelled, that the modelled measured signal is substituted for the signal measured during the measurement step for said angular correction and that the modelled measured signal comprises said modelled interfering signal and a modelled component signal.

2. Method according to Claim 1, wherein the modelled signal is determined by acquisition of a sampling of measured signals.

3. Method according to either of Claims 1 and 2, wherein the modelled signal is determined by acquisition of signals measured on several components.

4. Method according to Claim 3, wherein the acquisition of measured signals is performed on at least 5 components.

5. Method according to any one of the preceding claims, comprising a calibration step consisting in defining the reference position of the component corresponding to the desired angular orientation.

6. Method according to any one of the preceding claims, comprising an automatic orientation step consisting at least in varying the phase of the model of the component signal and identifying the phase, called the "component phase", that gives the best match between the measured signal and the model of the signal, the method then comprising a second step which consists in modifying the angular position of the component by the value of the phase-shift between the component phase and the reference position defined previously.

7. Method according to Claim 6, wherein the search for the component phase consists in jointly varying the phase of the component model and the phase of the interfering model and in finding the best match between the model of the signal and the measured signal.

8. Method according to Claim 6, wherein the search for the component phase consists in varying only the phase of the component model.

9. Method according to Claim 1, wherein the interfering signal is determined theoretically by taking account of the geometry of the component.

10. Method according to any one of the preceding claims, wherein the measurement is optical.

11. Device for orienting tube components comprising at least one cell (11) intended to transmit and receive a signal (5), information processing means (12) comprising a microprocessor (12'), **characterized in that** the device comprises a processing unit intended to produce a modelled interfering signal, the microprocessor (12') is configured to perform the processing of the information sent by the cell (11) and by a coder (4') situated on the axis of the tool for rotating the component (2) and is also configured to indicate the angular position using the method as defined in any one of the preceding claims.

12. Device according to Claim 11, further comprising a display screen (20).

13. Device according to either of Claims 11 and 12, said device being independent of the production machine in which it is mounted and modular.

14. Machine for producing flexible tubes, such as packaging tubes for viscous products comprising an orientation device according to one of Claims 11 to 13.
